Europäisches Patentamt

European Patent Office

Office européen des brevets

(19)

Veröffentlichungsnummer: **0 283 702**
**A2**

(12) # EUROPÄISCHE PATENTANMELDUNG

(21) Anmeldenummer: **88102039.0**

(51) Int. Cl.4: **A47J 47/00**

(22) Anmeldetag: **12.02.88**

(30) Priorität: **18.02.87 DE 3705132**

(43) Veröffentlichungstag der Anmeldung:
**28.09.88 Patentblatt 88/39**

(84) Benannte Vertragsstaaten:
**AT BE CH DE ES FR GB GR IT LI LU NL SE**

(71) Anmelder: **ALLSTAR Verbrauchsgüter GmbH**
**Klöcknerstrasse 3**
**D-6054 Rodgau 3(DE)**

(72) Erfinder: **Richter, Hans-Jürgen**
**Rudolf-Berta-Strasse 4**
**D-6483 Bad Soden-Salmünster 2(DE)**

(74) Vertreter: **Schulze, Ilse, Dipl.-Chem.**
**Gaisbergstrasse 3**
**D-6900 Heidelberg(DE)**

(54) **Haushaltbrett.**

(57) Es wird ein Haushaltbrett beschrieben, das eine Schneidfläche (1) aufweist, die von einer umlaufenden Saftrinne (4) umrandet ist. Die Schneidfläche des Brettes weist eine Schräge auf, die von einer die Saftrinne an einer Seite des Brettes begrenzenden Randkante ausgeht und gegen die gegenüberliegende Saftrinne verläuft. Die Saftrinne mündet in eine an einer Seite des Brettes vorgesehene Saftauffangkammer (5). Die der Schneidfläche gegenüberliegende Seite des Brettes ist durch vorstehende Rippen (12, 13, 14) in Kammern (15, 16, 17) geteilt, die als Arbeitsschalen dienen.

EP 0 283 702 A2

FIG.3

## Haushaltbrett

Die Erfindung betrifft ein Haushaltbrett mit Schneidfläche und an deren Umfang umlaufender Saftrinne.

Haushaltbretter dieser Art, aus Holz oder Kunststoff, weisen zwei parallele Breitseiten auf, von denen eine mit einer am Umfangsrand angeordneten Saftrinne versehen ist. Ein solches Haushaltbrett ist lediglich als Schneidbrett zu verwenden und die Saftrinne kann in der Regel nicht ausreichend genutzt werden.

Aufgabe der Erfindung ist es, ein Haushaltbrett der eingangs genannten Art zu schaffen, das sich sowohl als Schneid-als auch als Arbeits-und Servierbrett eignet und bei dem der beim Schneiden eines Bratens anfallende Saft weitgehend vollständig gesammelt werden kann.

Diese Aufgabe wird durch ein Haushaltbrett der eingangs genannten Art dadurch gelöst, daß die Schneidfläche des Brettes ausgehend von der die Saftrinne begrenzenden Randkante bis zu der an der gegenüberliegenden Seitenkante des Brettes vorgesehenen Saftrinne in einer leichten Schräge verläuft, und daß die die der Schneidfläche gegenüberliegende Seite des Brettes durch vorstehende Rippen in Arbeitsschalen bildende Kammern geteilt ist.

Zweckmäßige Weiterbildungen des Haushaltbrettes sind in den Unteransprüchen gekennzeichnet.

Ein solches Haushaltbrett ist durch die besondere Gestaltung und dadurch volle Ausnutzung seiner Breitseiten vielseitig zu verwenden und äußerst praktisch zu handhaben. Die abgeschrägte Schneidfläche gibt die Gewähr, daß beim Schneiden eines Bratens der dabei auslaufende Saft an der Schräge abfließt und in die Saftrinne gelangt, die hier zweckmäßig tiefer ist als am gegenüberliegenden Seitenrand des Brettes. Auch an diesem Seitenrand befindet sich aber eine Saftrinne, die lediglich als kleine Mule ausgebildet sein kann, da sich hier nicht viel Saft ansammeln wird. Die Saftrinne mündet in eine größere Saftauffangkammer, in der sich der Saft sammeln und aus der er ausgegossen werden kann. Die der Schneidfläche gegenüberliegende Seite des Brettes ist ebenfalls als Arbeitsfläche nutzbar gestaltet, und zwar durch Rippen in Arbeitsschalen bildende Kammern geteilt, die sich für verschiedene Arbeiten eignen. Vorzugsweise werden zwei oder drei solcher Arbeitsschalen vorgesehen. Diese können als Panierschalen dienen, oder sie können zum Anrichten und Servieren von Salaten und/oder Aufschnitt verwendet werden. Ein vorstehender Rand, mindestens an zwei gegenüberliegenden Seitenkanten des Brettes erleichtern das Anfassen und Tragen des Haushaltbrettes.

Die Erfindung wird anhand eines in den Zeichnungen dargestellten Ausführungsbeispiels näher erläutert. Es zeigen:

Fig. 1 eine Draufsicht auf die Schneidfläche eines Haushaltbrettes;

Fig. 2 eine Unteransicht auf die unterteilte Fläche der der Schneidfläche gegenüberliegenden Seite des Haushaltbrettes;

Fig. 3 eine Schnittansicht entlang der Linie A-A in Fig. 1;

Fig. 4 eine Draufsicht auf ein rundes Haushaltbrett; und

Fig. 5 eine Schnittansicht entlang der Linie B-B in Fig. 4.

Bei dem erfindungsgemäßen Haushaltbrett sind beide Flächen des Brettes B vollständig genutzt und dienen zur bequemen Handhabung im Haushalt.

Das Brett B weist auf einer Seite eine Schneidfläche 1 auf, die von einer Saftrinne 4, 4a umrandet wird. Die Schneidfläche 1 ist abgeschrägt, und zwar von einer beispielsweise die Saftrinne 4a begrenzenden Kante 4a/1 ausgehend gegen die gegenüberliegende Saftrinne 4. Damit ist gewährleistet, daß der aus dem geschnittenen Braten auslaufende Saft über die Schräge der Schneidfläche 1 gegen die Saftrinne 4 fließt, die vorzugsweise tiefer ist als die Saftrinne 4a an der erhöhten Seite der Schneidfläche 1. Diese Saftrinne 4a ist beispielsweise als flache Mulde gestaltet und praktisch nur dafür vorgesehen, daß über diesen Seitenrand 2a der Schneidfläche 1 nicht gegebenenfalls etwas vom Bratensaft über die Kante des Brettes B fließt. Die Saftrinne 4 und gegebenenfalls die Saftrinne 4a mündet in eine Saftauffangkammer 5, die sich zweckmäßig an einer Schmalseite 3 des Brettes B befindet. Der Boden dieser Saftauffangkamer 5 ist vorzugsweise ebenfalls abgeschrägt, diese Schräge verläuft jedoch entgegengesetzt zur Schräge der Schneidfläche 1. Die tiefe Saftrinne 4 mündet bei 6, also an der tieferen Stelle 5a in die Saftauffangkammer 5, wo sich die Hauptmenge des Saftes sammeln kann. Die Teile 4 und 4a der Saftrinne sind bei einem rechteckigen Brett B vorzugsweise an den langen Seitenrändern 2 und 2a des Brettes B angeordnet, während die Saftauffangschale 5 an einer Schmalseite 3 vorgesehen ist. An der gegenüberliegenden Schmalseite 3a des Brettes B ist ein Haltegriff 10 mit einem Griffloch 11 angebracht. Aus praktischen Gründen kann am Umfangsrand der Schneidfläche 1 des Brettes B ein umlaufender Steg 8 angeordnet werden, der gegebenenfalls gleichzeitg die Außenwand der Saftrinne 4, 4a und der Saftauffangkammer 5 bildet. Dieser Steg 8 kann im Abstand von den Außenkanten des Brettes B angeordnet werden, so daß ein Griffrand 9 vorsteht, der es ermöglicht, das Haushaltbrett an gegenüberliegenden Seiten mit der Hand von unten zu fassen, anzuheben und zu tragen.

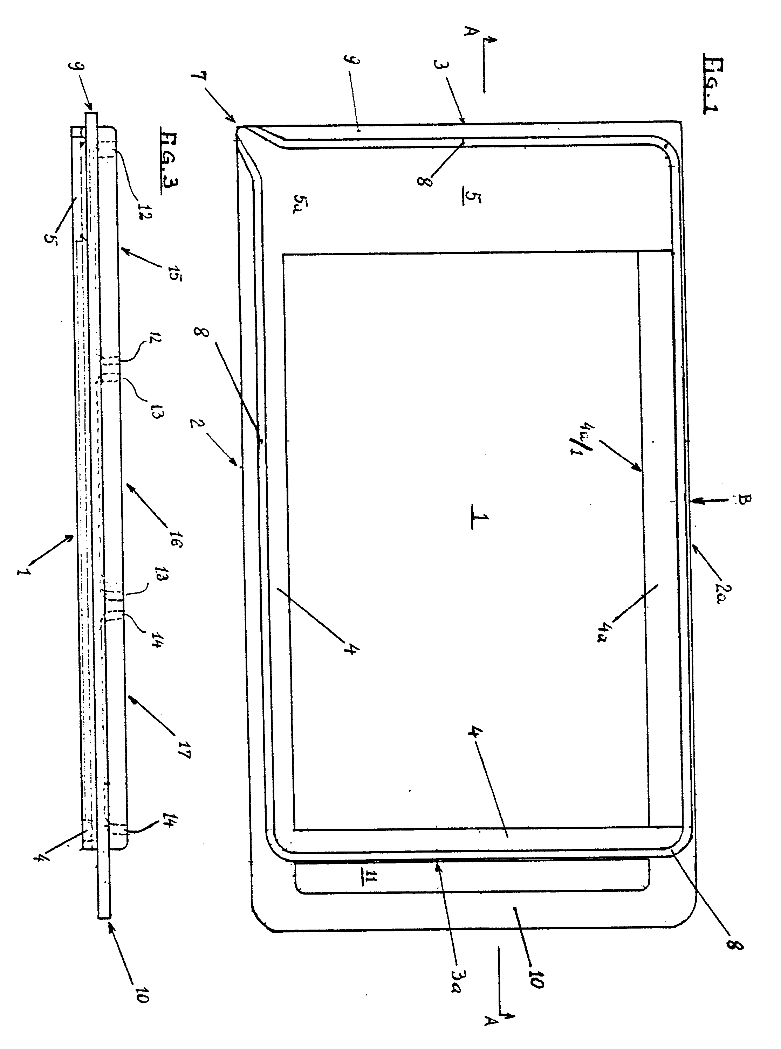

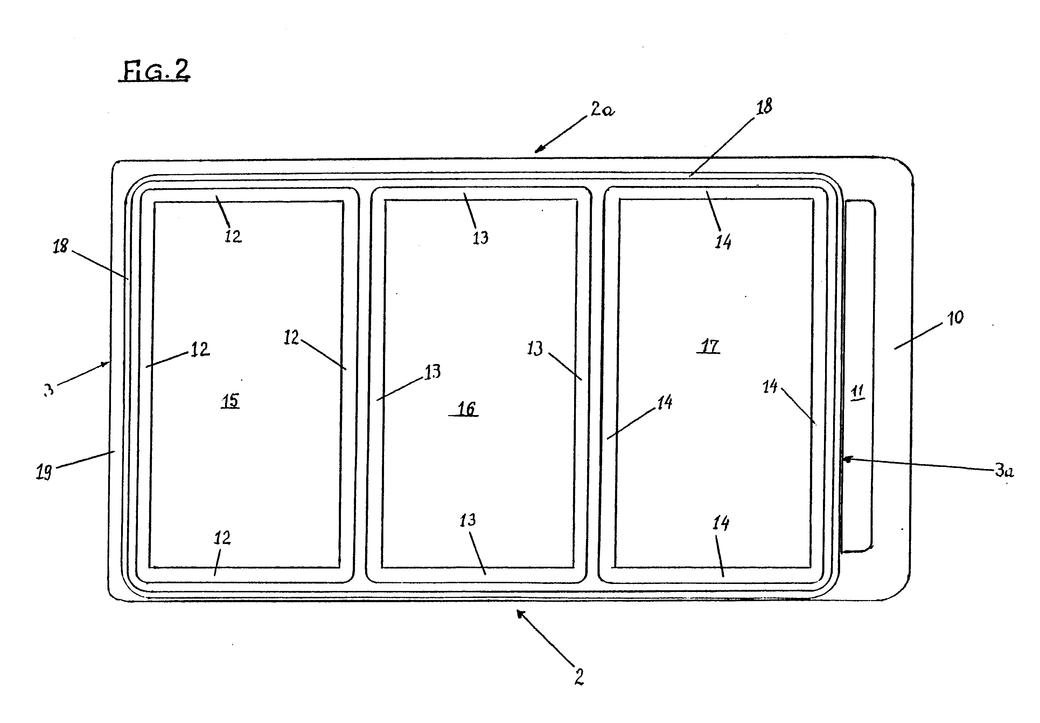

Die der Schneidfläche 1 gegenüberliegende Seite des Brettes B ist durch Rippen 12, 13, 14 in Kammern geteilt, die von den Rippen begrenzt als Arbeitsschalen 15, 16, 17 dienen. Das in Fig. 2 dargestellte Ausführungsbeispiel zeigt drei solcher Arbeitsschalen, die sich beispielsweise zur Aufnahme von Mehl, geschlagenem Ei und Semmelbrösel und damit zum Panieren eignen. Aber es können in diesen Arbeisschalen auch Salate, andere Beilagen, Wurst usw. angerichtet und das Haushaltbrett gleichzeitig zum Servieren verwendet werden.

Die Rippen 12, 13, 14, die die Fläche des Brettes B in Kammern teilen, können gleichzeitig als Standrippen dienen. Es kann aber auch ein gesonderter umlaufender Steg 18 vorgesehen sein, der mindestens gleich hoch oder höher ist als die die Arbeitsschalen 15, 16, 17 begrenzenden Rippen 12, 13, 14. Der Steg 18 befindet sich zweckmäßig im Abstand von den Randkanten des Brettes B, so daß auch an dieser Arbeitsseite des Brettes B ein von unten her mit der Hand faßbarer Griffrand 19 vorhanden ist.

Die Anzahl der Arbeitsschalen kann beliebig gewählt werden und sie richtet sich nach der Art des vorgesehenen Einsatzes des Haushaltbrettes. Das dargestellte Beispiel zeigt ein rechteckiges Haushaltbrett, dieses kann aber auch eine quadratische, runde, ovale oder irgendeine andere geometrische Form aufweisen.

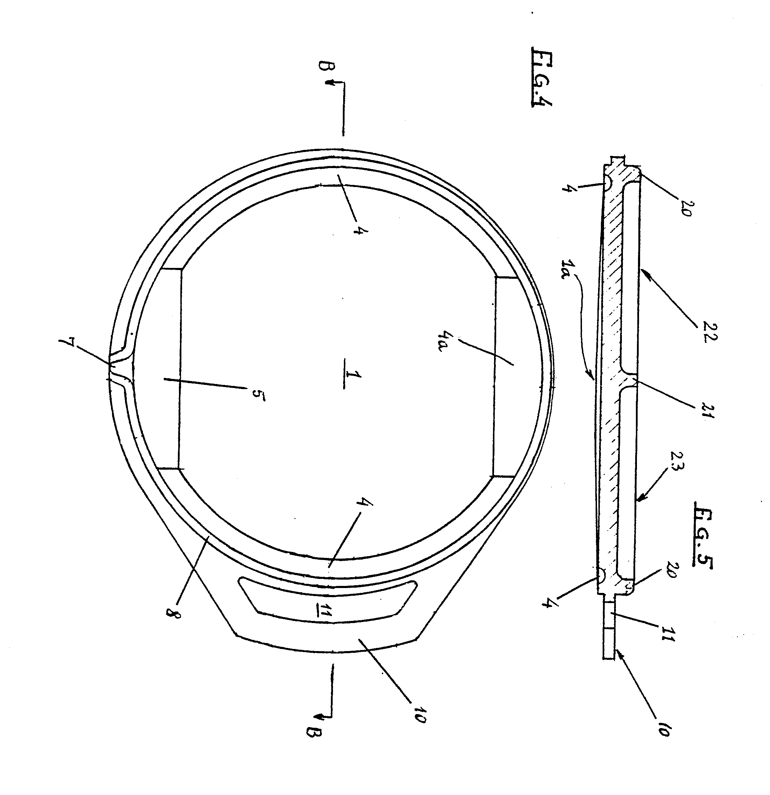

In den Figuren 4 und 5 ist ein rundes Haushaltbrett gezeigt, das die gleichen Grundmerkmale aufweist, wie das rechteckige Brett gemäß Figuren 1 bis 3.

Die umlaufende Saftrinne ist unterschiedlich tief, und zwar sind die gegenüberliegenden Saftrinnen 4 tiefer als die an einer Seite diese Saftrinnen 4 verbindende Saftrinne 4a. Diametral gegenüber der flacheren Saftrinne 4a ist die Saftauffangkammer 5 mit der Ausgußtülle 7 vorgesehen. Um bei diesem runden Haushaltbrett das Ablaufen des beim Schneiden eines Bratens austretenden Saftes sicherzustellen, ist die Schneidfläche 1 dieses Brettes in der Mitte 1a erhöht und verläuft gegen die Saftrinnen 4-4 leicht abfallend. Die der Schneidfläche 1 gegenüberliegende Seite des Brettes ist durch Rippen 20 und 21 in als Arbeitsschalen 22, 23 dienende Kammern geteilt. Auch bei diesem Brett können natürlich je nach Brettgröße zwei, drei oder mehr Arbeitsschalen vorgesehen sein.

## Ansprüche

1. Haushaltbrett mit Schneidfläche und an deren Umfangsrand umlaufender Saftrinne, **dadurch gekennzeichnet**, daß die Schneidfläche (1) des Brettes (B) ausgehend von einer die Saftrinne (4a) begrenzenden Randkante (4a/1) bis zu der an der gegenüberliegenden Seitenkante (2) des Brettes (B) vorgesehenen Saftrinne (4) in einer leichten Schräge verläuft, und daß die der Schneidfläche gegenüberliegende Seite des Brettes (B) durch vorstehende Rippen (12, 13, 14) in Arbeitsschalen (15, 16, 17) bildende Kammern geteilt ist.

2. Haushaltbrett nach Anspruch. 1, dadurch gekennzeichnet, daß an einem Seitenrand der Schneidfläche (1) des Brettes (B) eine Saftauffangkammer (5) vorgesehen ist, in die die umlaufende Saftrinne (4, 4a) mündet.

3. Haushaltbrett nach Anspruch 1 und 2, dadurch gekennzeichnet, daß der Boden der Saftauffangkammer (5) abgeschrägt ist, wobei diese Schräge entgegen der Schräge der Schneidfläche (1) verläuft.

4. Haushaltbrett nach den Ansprüchen 1 bis 3, dadurch gekennzeichnet, daß der in die tiefe Stelle (5a) der Saftauffangkammer (5) mündende Abschnitt der Saftrinne (4) tiefer ist als der dieser Saftrinne (4) gegenüberliegende Abschnitt der Saftrinne (4a).

5. Haushaltbrett nach Anspruch 2, dadurch gekennzeichnet, daß an der Ecke der tiefsten Stelle (5a) der Saftauffangkammer (5) eine Ausgußtülle (7) vorgesehen ist.

6. Haushaltbrett nach Anspruch 1, dadurch gekennzeichnet, daß der Boden einer jeden Arbeitsschale (15, 16, 17) abgeschrägt ist.

7. Haushaltbrett nach Anspruch 1, dadurch gekennzeichnet, daß mindestens an zwei gegenüberliegenden Seitenkanten (3, 3a) des Brettes (B) je eine durch von der Arbeitsfläche abstehende Standrippe oder einen Steg (18) gebildeter, von unten faßbarer Griffrand (9; 10) vorgesehen ist.

8. Haushaltbrett nach Anspruch 1, dadurch gekennzeichnet, daß an einer Seitenkante (3a) des Brettes (B) ein Haltegriff (10) mit Griffloch (11) vorgesehen ist.

Fig.1

Fig.3

Fig.2

FIG.4

FIG.5